# EUROPÄISCHE PATENTSCHRIFT

(11) **EP 2 535 228 B1**
(45) Veröffentlichungstag und Bekanntmachung des Hinweises auf die Patenterteilung: **19.03.2014**
(21) Anmeldenummer: 12175104.4
(22) Anmeldetag: 21.04.2008
(51) Int. Cl.: B60R 21/239

(54) **Gassackanordnung für ein Fahrzeuginsassen-Rückhaltesystem**
Gas bag assembly for a vehicle passenger retention system
Agencement de sac de gaz pour un système de retenue de passagers de véhicule

(30) Priorität: 19.04.2007 DE 202007006023 U
(43) Veröffentlichungstag der Anmeldung: 19.12.2012
(62) Teilanmeldung aus: 08749629.5
(73) Patentinhaber: Takata AG, 63743 Aschaffenburg (DE)
(72) Erfinder: Feller, Jens, 89171 Illerkirchberg (DE)
(74) Vertreter: Staroske, Sandro

(56) Entgegenhaltungen:
- EP-A1- 0 810 126
- DE-A1- 4 306 615
- GB-A- 2 421 932

## Beschreibung

Die Erfindung betrifft eine Gassackanordnung für ein Fahrzeuginsassen-Rückhaltesystem.

Es ist bekannt, in einem Gassack eines Fahrzeuginsassen-Rückhaltesystems eine Ausströmöffnung oder mehrere Ausströmöffnungen vorzusehen, um Gas aus dem teilweise oder vollständig aufgeblasenen Gassack kontrolliert abzuleiten. Das kontrollierte Ableiten von Gas hat den Zweck, den Gassack adaptiv, z. B. in Abhängigkeit von Körperkenngrößen (Gewicht, Größe) eines Fahrzeuginsassen, zu befüllen. Ein Gassack mit einer Ausströmöffnung zur adaptiven Befüllung ist z. B. in der EP 0 670 247 A1 beschrieben.

Die GB 2 421 932 A offenbart eine Gassackanordnung für ein Fahrzeuginsassen-Rückhaltesystem gemäß dem Oberbegriff des Anspruchs 1.

Das von der vorliegenden Erfindung zu lösende Problem besteht darin, eine Gassackanordnung mit einem Gassack zu schaffen, der einen auf einfache Weise herstellbaren Zugang zu einer Kammer des Gassacks aufweist.

Dieses Problem wird durch die Gassackanordnung mit den Merkmalen gemäß Anspruch 1 gelöst.

Weiterbildungen der Erfindung sind in den abhängigen Ansprüchen angegeben.

Danach ist eine Gassackanordnung für ein Fahrzeuginsassen-Rückhaltesystem vorgesehen, mit:
- einem Gassack, der mindestens eine aufblasbare Kammer und mindestens eine erste Öffnung aufweist; und
- einer Abdeckung, die die erste Öffnung des Gassacks teilweise überdeckt, wobei
- die Kammer des Gassacks durch den nicht von der Abdeckung abgedeckten Abschnitt der ersten Öffnung hindurch zugänglich ist, und
- die erste Öffnung schlitzförmig ausgebildet ist und sich mit einem Abschnitt außerhalb der Abdeckung erstreckt.

Die Erfindung wird im Folgenden anhand von Ausführungsbeispielen unter Bezugnahme auf die Figuren näher erläutert. Es zeigen:
- Fig. 1: einen Ausschnitt eines Gassacks einer Gassackanordnung gemäß eines Beispiels;
- Fig. 2: den Ausschnitt des Gassacks der Figur 1, der zumindest teilweise aufgeblasen ist;
- Fig. 3: einen Ausschnitt eines Gassacks einer Gassackanordnung gemäß eines weiteren Beispiels;
- Fig. 4A-4F: jeweils einen Ausschnitt eines Gassacks gemäß weiterer beispielhafter Varianten;
- Fig. 5: einen Ausschnitt eines Gassacks einer Gassackanordnung gemäß eines weiteren Beispiels;
- Fig. 6: einen Ausschnitt eines Gassacks einer Gassackanordnung gemäß eines weiteren Beispiels;
- Fig. 7A-7E: Schritte bei der Herstellung eines Gassacks für eine beispielhafte Gassackanordnung;
- Fig. 8A, 8B: Draufsicht bzw. seitliche Ansicht eines weiteren Beispiels einer Gassackanordnung;
- Fig. 9A, 9B: Draufsicht bzw. seitliche Ansicht eines weiteren Beispiels einer Gassackanordnung;
- Fig. 10A-13B: Ansichten verschiedener Schritte beim Durchführen eines beispielhaften Verfahrens zur Herstellung eines Gassackmoduls;
- Fig. 14A-16B: Ansichten verschiedener Schritte beim Herstellen einer Variante einer beispielhaften Gassackanordnung;
- Fig. 17A-17J: weitere Varianten von beispielhaften Gassackanordnungen;
- Fig. 17M: eine Ausführungsform der erfindungsgemäßen Gassackanordnung;
- Fig. 18: eine weitere Ausführungsform der erfindungsgemäßen Gassackanordnung;
- Fig. 19A, 19B: eine weitere Ausführungsform der erfindungsgemäßen Gassackanordnung;
- Fig. 20: noch ein weiteres Beispiel einer Gassackanordnung.

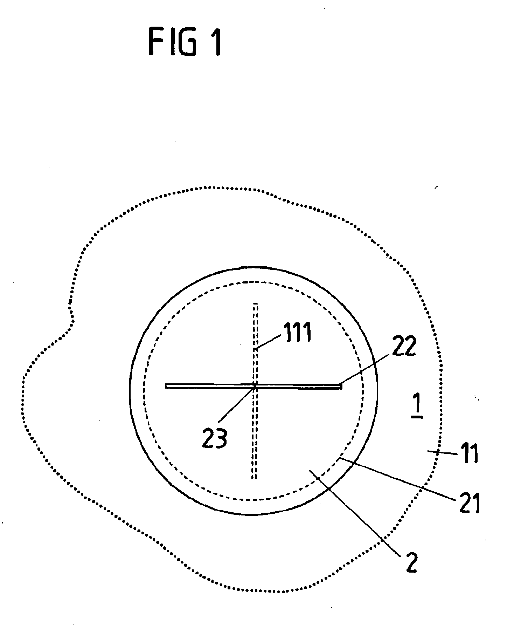

Die Figuren 1 bis 17J und 20 zeigen keine Ausführungsbeispiele der Erfindung, dienen jedoch dem besseren Verständnis der Erfindung.

Figur 1 betrifft ein erstes Beispiel eines Gassacks und zeigt einen Ausschnitt eines Gassacks 1, der ein Gassackmaterial in Form einer Gewebelage 11 aufweist, wobei die Gewebelage 11 eine aufblasbare Kammer des Gassacks 1 begrenzt. In der Gewebelage 11 ist eine erste Öffnung in Form eines ersten Schlitzes 111 ausgebildet. Im Bereich des Schlitzes 111 befindet sich eine Abdeckung in Form einer kreisförmigen Funktionslage 2, die den Schlitz 111 mit einem mittleren Bereich überdeckt. Die Funktionslage 2 ist mittels einer Umfangsnaht 21 mit der Gewebelage 11 des Gassacks 1 verbunden.

In der Funktionslage 2 ist eine zweite Öffnung in Form eines zweiten Schlitzes 22 ausgebildet, der den ersten Schlitz 111 senkrecht kreuzt. Es entsteht ein Überlappungsbereich 23, in dem der erste Schlitz 111 und der zweite Schlitz 22 überlappen, so dass das Innere des Gassacks (die durch die Gassacklage 11 gebildete Kammer) durch den ersten und den zweiten Schlitz 111, 22, d.h. insbesondere durch den Überlappungsbereich 23, hindurch von außen zugänglich ist.

In dem ersten Beispiel ist die Funktionslage 2 an einer Außenseite der Gassacklage 11 angeordnet. Alternativ oder zusätzlich wäre möglich, die Funktionslage oder auch eine weitere Funktionslage an einer Innenseite des Gassacks, das heißt an einer Seite der Gassacklage 11, die der durch die Gassacklage 11 gebildeten aufblasbaren Kammer des Gassacks, zugewandt ist, vorzusehen.

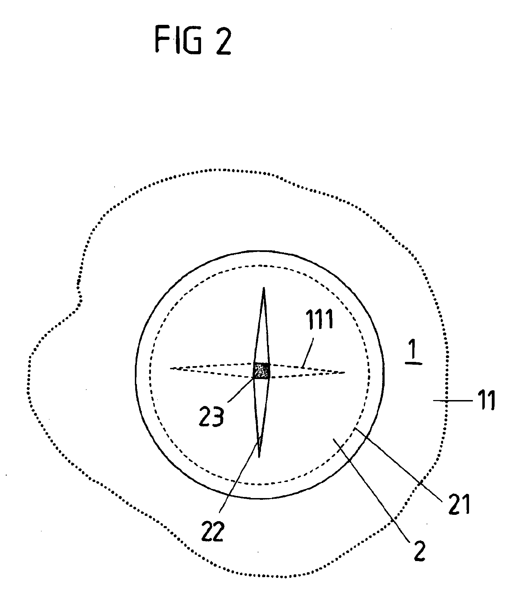

Figur 2 bezieht sich auf ein zweites Beispiel eines Gassacks und entspricht im Wesentlichen dem in Figur 1 dargestellten Beispiel. In einer Gassacklage 11 ist ein erster Schlitz 111 ausgebildet, der von einer Funktionslage 2 überdeckt ist. In der Funktionslage 2 ist ein zweiter Schlitz 22 angeordnet, der senkrecht zum ersten Schlitz 111 orientiert ist und mit dem ersten Schlitz in einem Überlappungsbereich 23 überlappt.

Beim Aufblasen des Gassacks 1 wird durch den Innendruck des Gassacks die Gassacklage 11 und die Funktionslage 2 gedehnt, so dass sich die Schlitze 111 und 22 aufweiten. Dadurch wird insbesondere der Überlappbereich 23 und somit die Ausströmöffnung, die durch den ersten und den zweiten Schlitz gebildet wird, vergrößert, wobei das Maß der Vergrößerung abhängig von dem im Gassack herrschenden Innendruck ist. Je größer der Innendruck ist, desto stärker dehnt sich das Gassackmaterial 11 und das Material der Funktionslage 2, so dass der erste und der zweite Schlitz 111, 22 zusammen eine druckabhängige, d.h. adaptive, Ausströmöffnung bilden.

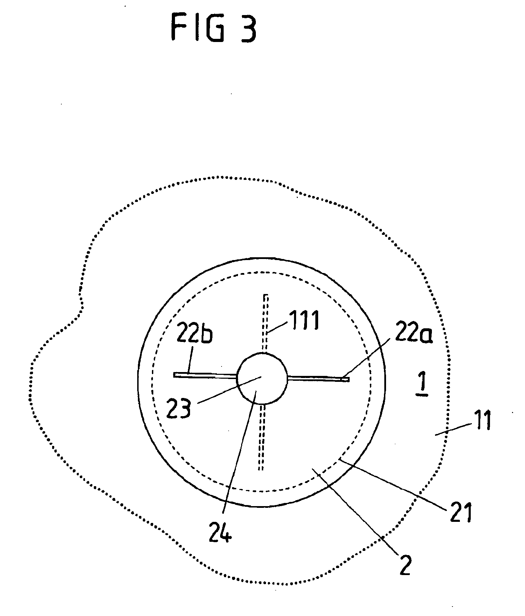

Figur 3 zeigt einen Ausschnitt aus einem Gassack einer Gassackanordnung gemäß einer dritten Variante eines Gassacks. Diese Variante entspricht ebenfalls im Wesentlichen dem ersten Beispiel, jedoch ist die zweite Öffnung, die in der außen am Gassack befestigten Funktionslage 2 ausgebildet ist, nicht rein schlitzförmig ausgebildet, sondern weist einen kreisförmigen Bereich 24 auf, von dem sich radial zwei einander gegenüberliegende schlitzförmige Bereiche 22a, 22b erstrecken. Durch die zusätzliche kreisförmige Öffnung 24 vergrößert sich ein Überlappbereich 23 mit einem in der Gassacklage 11 ausgebildeten ersten Schlitz 111, wodurch eine Ausströmöffnung mit einer größeren effektiven Öffnung entsteht, so dass ein größerer Gasstrom aus dem Gassack ausströmen kann.

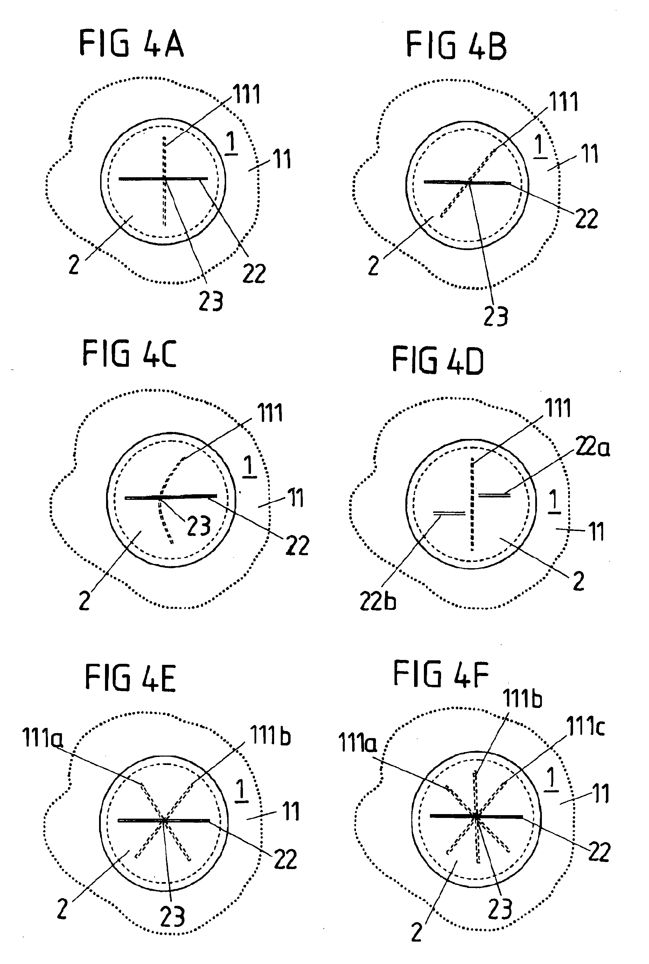

Die Figuren 4A bis 4F betreffen verschiedene Beispiele schlitzförmiger erster und zweiter Öffnungen 111, 22, die in einer Gassacklage 11 bzw. in einer Funktionslage 2 ausgebildet sind.

Figur 4A entspricht dem Beispiel der Figur 1, wonach sich eine schlitzförmige erste und eine schlitzförmige zweite Öffnung senkrecht kreuzen. Im Beispiel der Figur 4B kreuzen sich die schlitzförmige erste Öffnung 111 und die schlitzförmige zweite Öffnung 22 nicht unter einem senkrechten Winkel, sondern verlaufen schräg zueinander, so dass sie einen spitzen Winkel einschließen.

In Figur 4C ist die erste schlitzförmige Öffnung 111 gekrümmt ausgebildet, wobei sie dennoch die in der Funktionslage 2 ausgebildete Öffnung 22 kreuzt und mit dieser einen Überlappungsbereich 23 bildet.

Gemäß Figur 4D weist die Gassacklage 11 einen einzelnen ersten Schlitz 111 auf, während die Funktionslage 2 zwei zweite Öffnungen in Form zweier Schlitze 22a und 22b aufweist. Die Schlitze 22a und 22b sind parallel zueinander angeordnet, wobei sie senkrecht zum ersten Schlitz 111 und in einer Richtung entlang des Schlitzes 111 versetzt zueinander angeordnet sind. Die zweiten Schlitze 22a, 22b überlappen nicht mit dem ersten Schlitz 111. Die Funktionslage 2 ist jedoch im Bereich des ersten Schlitzes beabstandet zur Gassacklage 11 angeordnet, so dass Gas durch den ersten Schlitz 111 austreten und durch die zweiten Schlitze 22a, 22b hindurch aus dem Gassack ausströmen kann.

Die in Figur 4E dargestellte Variante weist zwei schlitzförmige erste Öffnungen 111a und 111b auf, die gekreuzt zueinander verlaufen. In der Funktionslage 2 ist ein einzelner zweiter Schlitz 22 als zweite Öffnung angeordnet, der winklig sowohl zu dem Schlitz 111a als auch zu dem Schlitz 111 b in der Gassacklage 11 verläuft. Die drei Schlitze 111 a, 111 bund 22 sind so zueinander angeordnet, dass jeweils ein Mittelabschnitt eines Schlitzes mit einem Mittelabschnitt der beiden anderen Schlitze überlappt, wodurch ein in Bezug auf die jeweilige Länge der Schlitze mittiger Überlappbereich 23 entsteht. Zudem sind die Schlitze um jeweils 60 Grad gegeneinander verdreht.

Im Beispiel der Figur 4F sind in der Gassacklage 11 drei erste Öffnungen in Form dreier Schlitze 111 a, 111 b sowie 111 c angeordnet, die über Kreuz zu einem einzelnen in der Funktionslage 2 vorhandenen Schlitz 22 orientiert sind. Die Schlitze 111a, 111b, 111c sowie 22 bilden ähnlich der Figur 4E einen mittigen Überlappbereich 23 und sind um einen gemeinsamen Mittelpunkt um einen Winkel von 45 Grad zueinander verdreht angeordnet.

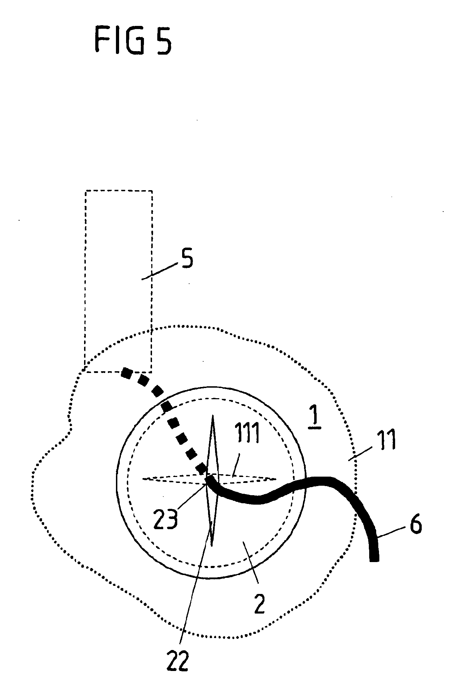

Figur 5 zeigt einen Ausschnitt aus einem Gassack einer Gassackanordnung gemäß eines Beispiels. Im Wesentlichen entspricht die Ausführung dem zweiten Beispiel, das in der Figur 2 dargestellt ist. Eine Gassacklage 11 weist eine schlitzförmige erste Öffnung 111 auf, die von einer Funktionslage 2 überdeckt ist. In der Funktionslage 2 ist eine ebenfalls schlitzförmige zweite Öffnung 22 ausgebildet, die die erste Öffnung 111 senkrecht kreuzt. In einem Überlappungsbereich 23, in dem die erste Öffnung 111 mit der zweiten Öffnung 22 überlappt, entsteht ein Zugang zu einer durch die Gassacklage 11 begrenzten Kammer des Gassacks 1.

In der Kammer des Gassacks 1 ist ein Gasgenerator 5 zum Aufblasen der Kammer angeordnet. Der Gasgenerator 5 ist über eine elektrische Verbindungsleitung in Form eines Zündkabels 6 mit einer außerhalb des Gassacks 1 angeordneten Steuereinrichtung (nicht dargestellt) verbunden. Das Zündkabel 6 wird durch den die erste Öffnung 111 und die zweite Öffnung 22 gebildeten Überlappbereich 23 aus der Kammer des Gassacks 1 aus dem Gassack 1 herausgeführt. Die erste und die zweite Öffnung 111, 22 können so angeordnet und ausgebildet sein, dass der Überlappbereich 23 ausschließlich als Durchführung für das Kabel 6 ausgebildet ist. In einer anderen Variante sind die Öffnungen 111 und 22 so angeordnet und ausgebildet, dass sie sowohl einen Zugang für das Zündkabel als auch eine adaptive Ausströmöffnung bilden, über die Gas aus dem Gassack ausströmen kann.

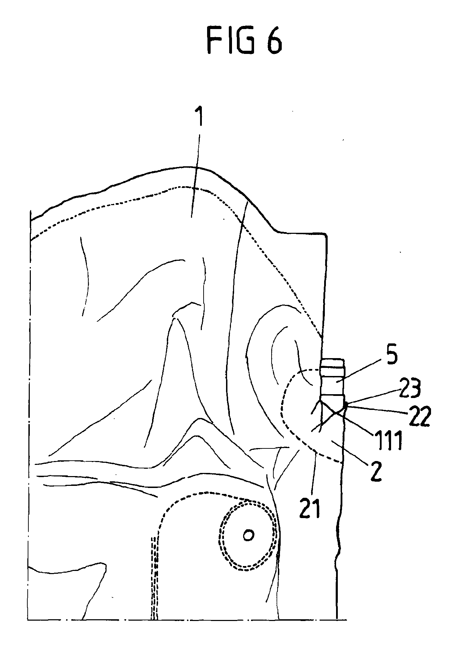

Figur 6 zeigt eine weitere Variante einer Gassackanordnung. Dargestellt ist ein Gassack 1 in einer Außenansicht. Der Gassack 1 weist in einer Gassacklage eine erste Öffnung 111 auf, die von einer Funktionslage 2 überdeckt ist, wobei die Funktionslage mittels einer Naht 21 an einer Innenseite des Gassacks 1 angenäht ist und deshalb in Figur 6 nicht zu sehen ist. In der Funktionslage 2 ist eine zweite Öffnung angeordnet, die mit der ersten Öffnung 111 überlappt, so dass ein Überlappbereich 23 entsteht, der einen Zugang zum Gassackinneren bildet. Durch den Überlappbereich 23 ragt ein Gasgenerator 5 mit einem Abschnitt in das Gassackinnere hinein.

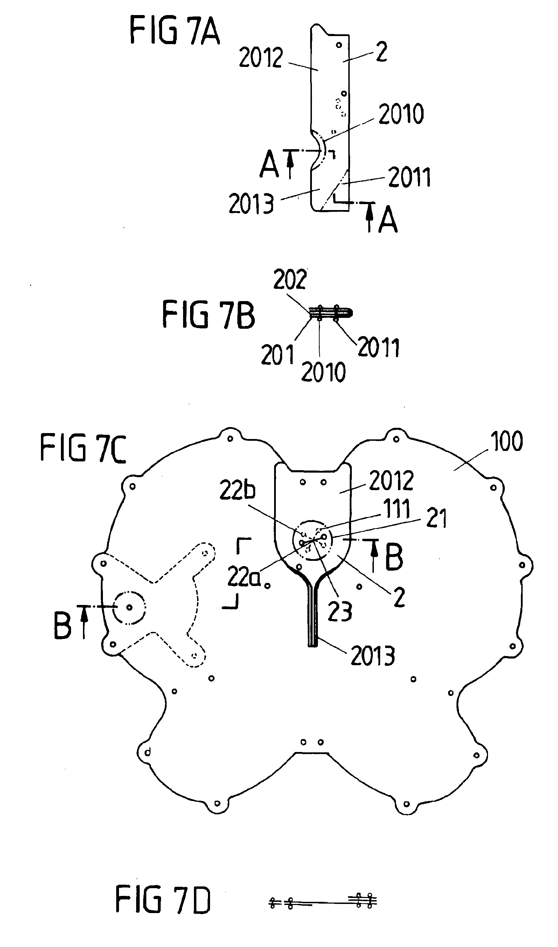

Die Figuren 7A bis 7E betreffen eine Variante zur Herstellung eines Gassacks für eine Gassackanordnung z.B. gemäß Figur 6. Figur 7A zeigt eine separat zum Gassack gefertigte Abdeckung in Form einer Funktionslage 2. Figur 7B ist eine Schnittansicht der Funktionslage 2 (entlang A-A). Die Funktionslage 2 weist zwei übereinander gelegte Materiallagen 201 und 202 auf und ist an einem Endabschnitt 2013 aufeinander gefaltet, wobei die aufeinander gefalteten Teilabschnitte der Funktionslage 2 mittels zweier Nähte 2010 und 2011 vernäht sind. Ein dem Endabschnitt 2013 abgewandter Abschnitt 2012 der Funktionslage 2 lässt sich hingegen auseinander klappen. In diesem Zustand (auseinander gefalteter Abschnitt 2012 und vernähter Abschnitt 2013) wird die Funktionslage 2 auf einem Gassackzuschnitt 100 angeordnet. Dies ist in Figur 7C dargestellt.

Der Gassackzuschnitt 100 ist ein in Bezug auf eine mittlere Symmetrieachse symmetrischer Gewebezuschnitt, der eine schlitzförmige erste Öffnung 111 (in Figur 7C gestrichelt gezeichnet) aufweist. Die Funktionslage 2 ist so im Bereich der mittleren Symmetrieachse des Gassackzuschnitts 100 angeordnet und mittels einer kreisförmigen Naht 21 mit dem Gassackzuschnitt 100 verbunden, dass sie die erste Öffnung 111 überdeckt.

Darüber hinaus ist in jeder der beiden Lagen 201, 202 der Funktionslage 2 jeweils eine schlitzförmige zweite Öffnung 22a bzw. 22b ausgebildet. Die Schlitze 22a, 22b verlaufen winklig zueinander und sind so orientiert, dass sie mit dem ersten Schlitz 111 mit einem mittleren Abschnitt überlappen, so dass die Mitten der Schlitze einen Überlappbereich 23 bilden und ein Zugang zum Inneren des zu bildenden Gassacks entsteht.

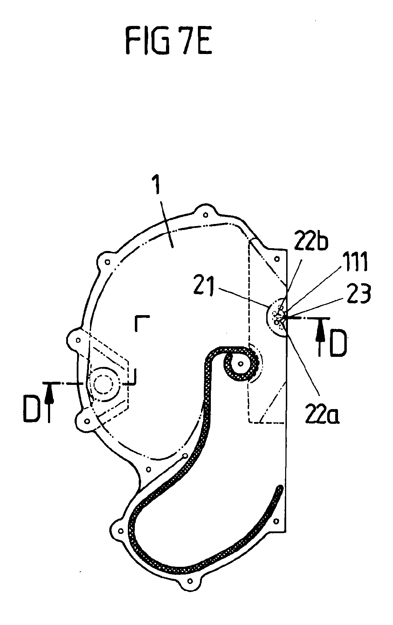

Einen Schnitt (entlang B-B) durch den Gassackzuschnitt 100 der Figur 7C, an dem die Funktionslage 2 angenäht ist, zeigt die Figur 7D. Der aus dem Gassackzuschnitt 100 hergestellte Gassack ist in der Figur 7E dargestellt. Der Gassackzuschnitt 100 ist entlang seiner mittleren Symmetrieachse zusammengefaltet und mittels verschiedener, teilweise entlang seines äußeren Umfangs verlaufender Nähte vernäht, so dass sich die Funktionslage 2 im Innern (z.B. in einer aufblasbaren Kammer) des fertiggestellten Gassacks 1 befindet. Im fertigen Gassack 1 dient die Zugangsöffnung, die durch den Überlappungsbereich 23 der Schlitze 111, 22a, 22b gebildet ist, beispielsweise dazu, einen Teil eines Gasgenerators (nicht dargestellt) in den Gassack hineinragen zu lassen.

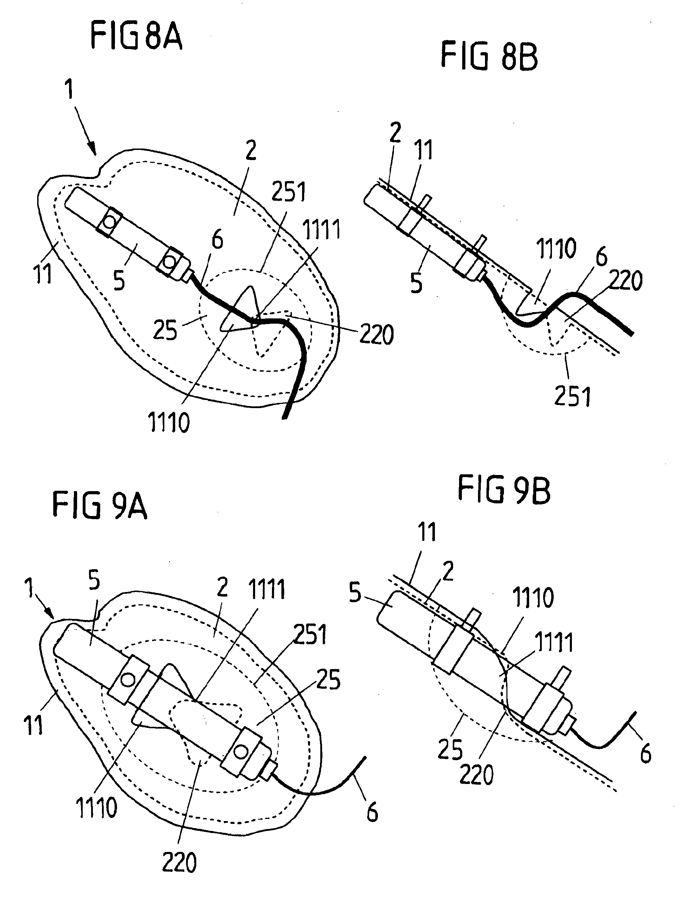

Die Figuren 8A und 8B betreffen ein weiteres Beispiel einer Gassackanordnung, wobei Fig. 8B eine seitliche Ansicht der Anordnung der Figur 8A in "Butterfly"-Darstellung ist. Dargestellt ist ein Teilbereich eines Gassacks 1, der eine aufblasbare Kammer aufweist, die durch eine erste Lage 11 eines Gassackmaterials begrenzt ist. An der Innenseite der Gassacklage 11 ist eine zweite Lage 2 eines Gassackmaterials (angedeutet durch eine gestrichelte Linie, die dem Rand der ersten Lage 11 folgt) angeordnet. Die erste und die zweite Lage 11, 2 können z.B. über eine umlaufende Naht miteinander verbunden sein. In der ersten Gassacklage 11 ist eine erste Öffnung 1110 und in der zweiten Gassacklage 2 eine zweite Öffnung 220 vorgesehen, die jeweils dreieckförmig ausgebildet sind. Die (abgerundeten) Spitzen der Öffnungen 1110 und 220 überlappen, wobei durch den Überlapp eine Durchgangsöffnung 1111 zur Kammer des Gassacks gebildet wird.

In der Kammer des Gassacks 1 ist ein Gasgenerator 5 angeordnet, dessen Zündkabel 6 durch die überlappenden Öffnungen 1110, 220 gebildete Durchgangsöffnung 1111 aus dem Gassackinneren heraus geführt ist. Ein elliptischer Bereich 25 der zweiten Lage 2, der sich um die Öffnungen 1110, 220 herum erstreckt, ist mittels einer Naht 251 (von innen) an die erste Gassacklage 11 angenäht. Die Lagen 11, 2 sind so ausgebildet und die Öffnungen 1110, 220 so zueinander positioniert, dass die Lagen 11, 2 beim Durchführen des Kabels 6 gegeneinander verspannt werden und Randabschnitte der ersten und der zweiten Öffnung 1110, 220, d.h. der Rand der Durchgangsöffnung 1111, nach Montage des Kabels 6 dicht an dem Kabel 6 anliegt.

Die Umnähung 251 der Öffnungen 1110, 220 ist für das Verspannen der Lagen, d.h. für den Abdichteffekt, nicht zwingend erforderlich. Der Effekt kann auch ohne die Umnähung erzielt werden, wobei insbesondere auch andere benachbarte Nähte, z.B. Umfangsnähte oder andere Fixierungsnähte, eine Fixierung der Lagen 11, 2 bewirken, die die Verspannung beeinflusst.

Die Figuren 9A und 9B betreffen eine weitere Variante einer Gassackanordnung, wonach sich ein Gasgenerator 5 nicht komplett im Inneren des Gassacks 1 befindet, sondern teilweise aus dem Gassack herausragt. Ähnlich der Figuren 8A, 8B weist der Gassack 1 der Figur 9A, 9B eine erste und eine zweite Lage 11, 2 auf, in der jeweils eine (dreieckförmige) Öffnung 1110 bzw. 220 angeordnet ist, die sich abschnittsweise überlappen, wobei der Überlapp eine Durchgangsöffnung 1111 bildet, durch die das Gassackinnere von außen zugänglich ist. Durch die Durchgangsöffnung 1111 ragt der Gasgenerator 5 von außen in das Gassackinnere, d.h. in die Kammer des Gassacks, hinein.

Des Weiteren sind die Öffnungen 1110, 220 wiederum mit einer Umnähung 251 umgeben, die die zweite Lage 2 mit der ersten Lage 11 verbindet. Die Lagen 11, 2 und die Öffnungen 1110 und 220 sind so ausgebildet und zueinander positioniert, dass die Lagen 11, 2 durch den durch die Öffnungen 1110 und 220 hindurchragenden Gasgenerator so gegeneinander vorgespannt werden, dass der Rand der Durchgangsöffnung 1111 am Gasgenerator 5 anliegt und die Durchgangsöffnung 1111 somit abgedichtet ist.

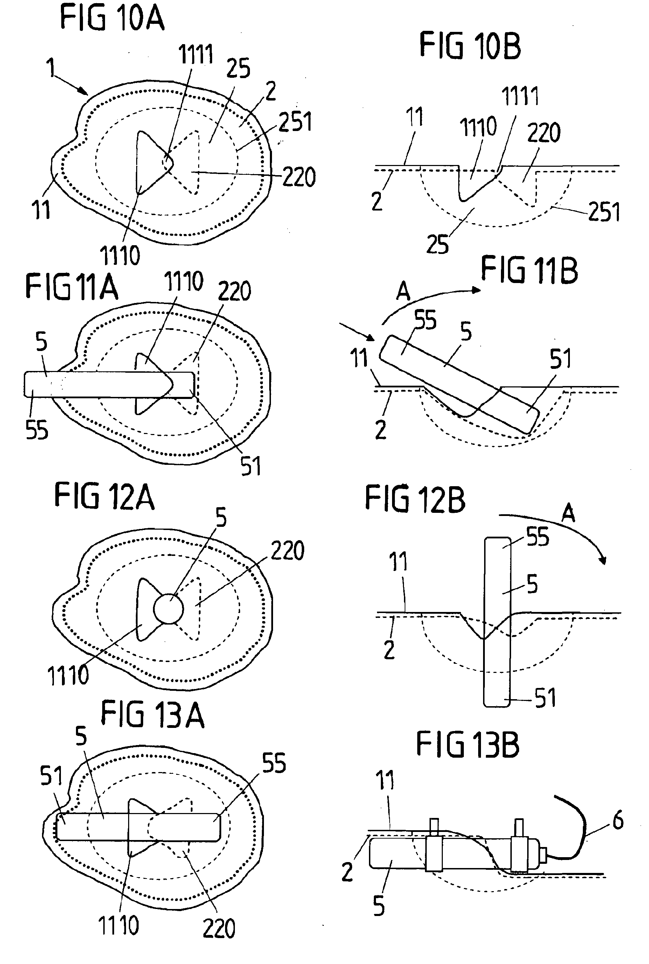

In den Figuren 10A bis 13B ist dargestellt, wie ein Gassack durch die Öffnungen 1110, 220 hindurchgeführt und in die in Figur 9A gezeigte Endposition gebracht werden kann. Die Figuren 10A, 10B zeigen den Gassack ohne Gasgenerator, wobei die Gassackanordnung derjenigen der Figur 9A und 9B entspricht. Die Figuren 10B bis 13B zeigen die Anordnung jeweils in seitlicher Butterfly-Ansicht.

Der Gasgenerator 5 wird folgendermaßen in den Gassack 1 eingeführt: Zunächst wird ein erstes Ende 51 des (Rohr-)gasgenerators 5 durch die (äußere) erste und die (innere) zweite Öffnung 1110, 220 eingeschoben, so dass das Ende 51 in die Kammer des Gassacks hineinragt und sich ein zweites Ende 55 des Gasgenerators, das dem ersten Ende 51 gegenüberliegt, außerhalb des Gassacks 1 befindet. Hierbei können die Lagen 11, 2 so dehnbar ausgebildet sein, dass sie sich beim Einführen des Gasgenerators etwas dehnen und das Ende 51 problemlos in die Kammer des Gassacks eingeführt werden kann. In dieser ersten Position befindet sich das erste Ende 51 weiter entfernt von der zweiten als von der ersten Öffnung (Fig. 11 A, 11 B).

Anschließend wird der Gasgenerator 5 um etwa 180° (entlang des Pfeils A; vgl. Figuren 11 B bis 13B) in eine zweite Position (Endposition) gedreht (Figur 13A, die der Figur 9A entspricht). In der Endposition liegt das erste Ende 51 näher an der ersten als an der zweiten Öffnung.

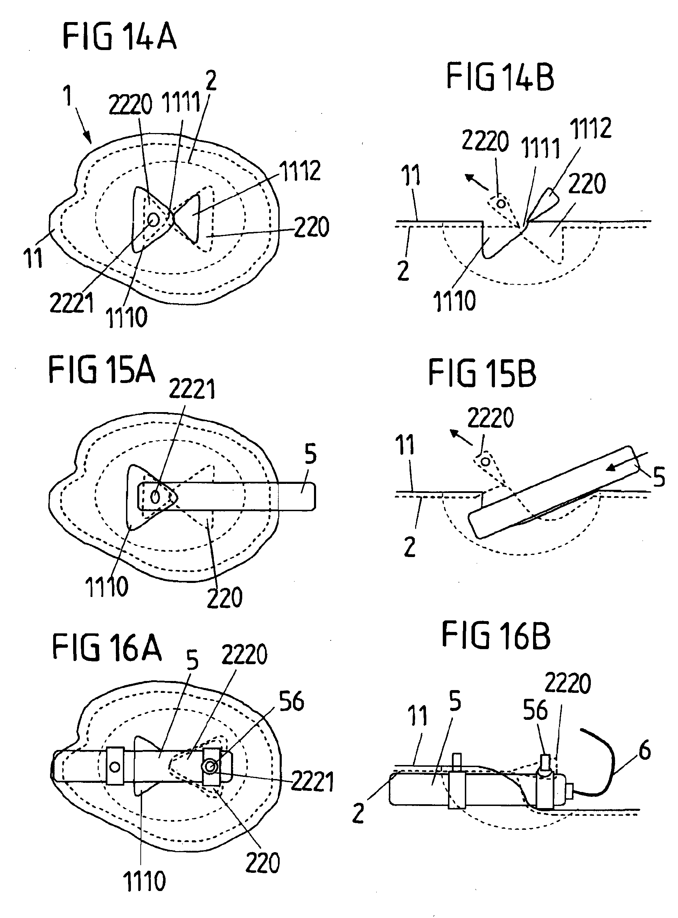

Alternativ kann der Gasgenerator auch direkt "in richtiger Richtung" eingeführt werden, d.h. ohne eine 180°-Drehung vorzunehmen. Dies ist in den Figuren 14A bis 16B dargestellt, wobei die Figuren 14B bis 16B wiederum eine Butterfly-Darstellung sind.

Der Gasgenerator 5 wird in dieser Variante direkt in der Orientierung der gewünschten Endposition durch die Durchgangsöffnung 1111, die durch den Überlapp der ersten Öffnung 1110 und der zweiten Öffnung 220 gebildet ist, eingeführt, wobei die Gassacklagen 11, 2 so dehnbar gestaltet sein können, dass dies problemlos möglich ist. Der Gasgenerator 5 wird durch die Durchgangsöffnung 1111 bis zu seiner Endposition eingeführt (Figur 16A).

In dem Beispiel der Figuren 14A bis 16B grenzen an die Öffnungen 1110 bzw. 220 eine erste Lasche 1112 bzw. eine zweite Lasche 2220 an, wobei die Laschen 2220, 1112 ebenfalls Dreiecksform haben und mit ihrer Spitze mit dem Rand der Spitze der jeweiligen Öffnung verbunden sind. Die Laschen entstehen z.B. durch entsprechendes Ausschneiden (oder Ausstanzen) der Öffnungen 1110, 220, wobei im Bereich der jeweiligen Spitzen der dreieckförmigen Öffnungen 1110, 220 der Schnitt unterbrochen ist.

Die Laschen 2220, 1112 sind so umgebogen, so dass sie in den Bereich der jeweils anderen Öffnung hineinragen; vgl. insbesondere Figuren 14B und 15B. Nach Einführen des Gasgenerators 5 wird die (innere) zweite Lasche 2220 zurück in Richtung auf die zweite Öffnung 220 umgeklappt und mit einem Befestigungsbolzen 56 an dem Gasgenerator 5 (bzw. an einer Schelle, die den Gasgenerator 5 umgibt) befestigt. Hierzu weist die Lasche 2220 eine Befestigungsstruktur in Form einer Öffnung 2221 auf, durch die der Bolzen 56 hindurchgreift.

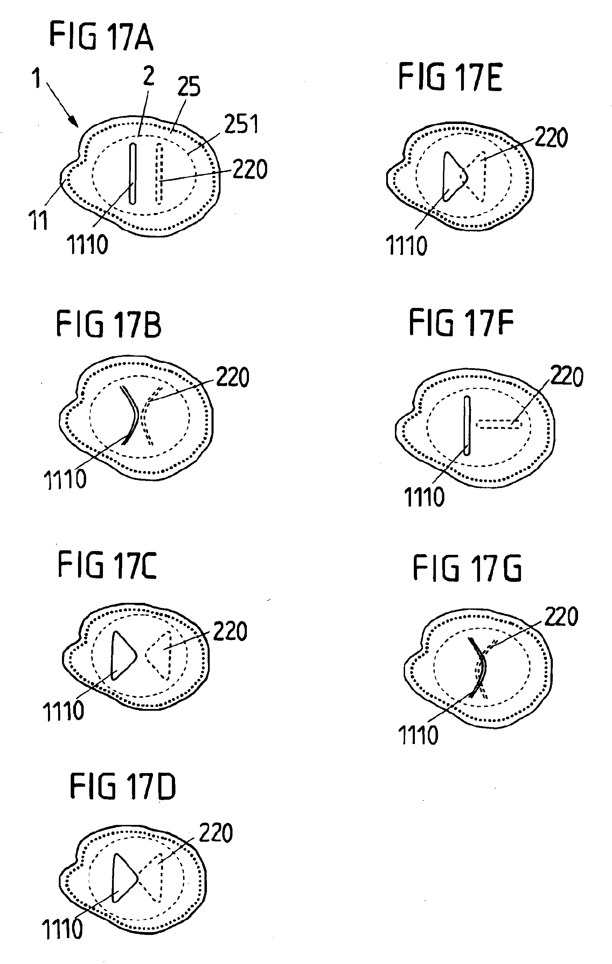

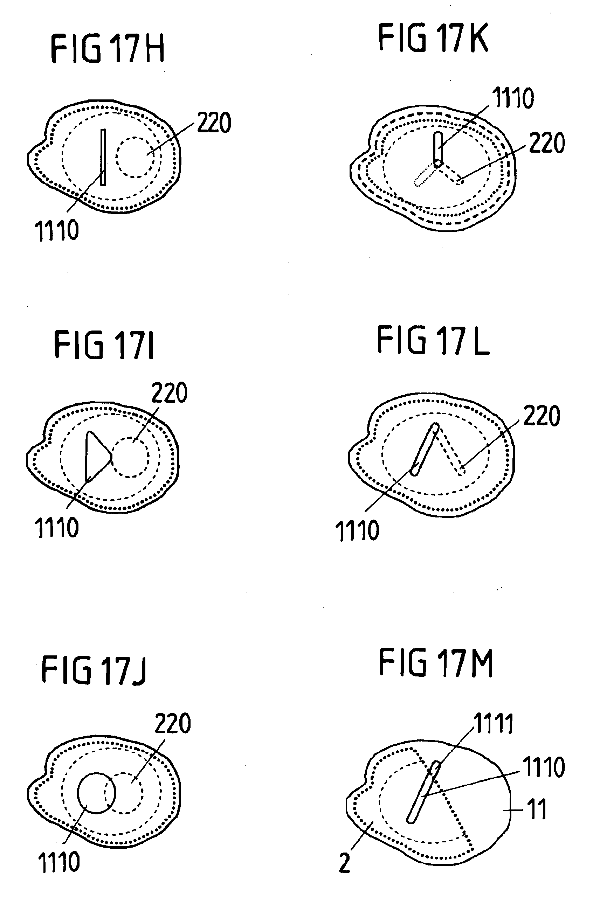

Weitere Ausgestaltungs- bzw. Anordnungsvarianten von ersten und zweiten Öffnungen, die sich z.B. auch zum Durchführen eines Gasgenerators eignen, sind in den Figuren 17A bis 17K dargestellt. Beispielsweise müssen die erste und die zweite Öffnung 1110, 220 nicht unbedingt einander überlappend angeordnet sein (vgl. Fig. 17A-17D, 17F, 17H, 17I). Des Weiteren müssen die Öffnungen natürlich nicht dreieckförmig ausgebildet sein, sondern können - wie bereits in den Figuren 4A bis 4F gezeigt - insbesondere auch schlitzförmig sein. Andere Geometrien sind selbstverständlich ebenfalls von der Erfindung erfasst, z.B. gekrümmte Öffnungen (Figur 17B, 17G) oder kreisförmige Öffnungen (Figuren 17H bis 17J) bzw. Kombinationen unterschiedlich gearteter Öffnungen.

Es ist auch möglich, mehr als zwei Öffnungen vorzusehen, wobei z.B. zusätzlich zu der ersten und der zweiten Gassacklage 11, 2 eine dritte bzw. mehrere zusätzliche Lagen vorgesehen sein können. In jeder der Lagen kann eine Öffnung angeordnet sein, die einen Zugang zu der Kammer des Gassacks ermöglichen. Die Öffnungen können sich mit einem Abschnitt überlappen (wie in Figur 17K gezeigt); dies ist jedoch nicht zwingend erforderlich.

Gemäß einem Aspekt der Erfindung weist die zweite Lage 2 keine Öffnung auf, sondern deckt nur einen Teil der ersten Öffnung 1110 ab (Fig. 17M). Der Abschnitt der Öffnung 1110, der durch die zweite Lage 2 nicht abgedeckt ist, bildet dann die Durchgangsöffnung 1111 zur Kammer des Gassacks.

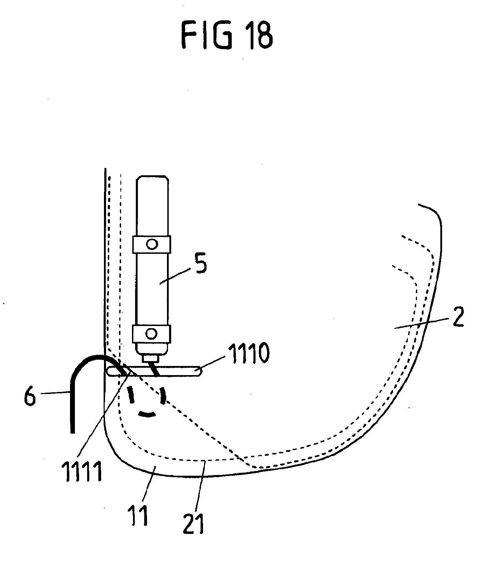

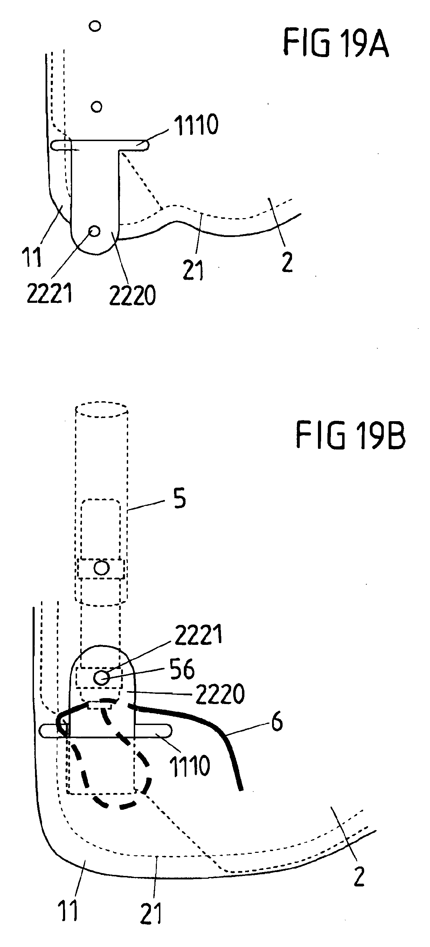

Eine ähnliche erfindungsgemäße Variante betreffen die Figuren 18, 19A und 19B. Hier überdeckt die zweite (innere) Lage 2 ebenfalls nur einen Teil der ersten Öffnung 1110. Der Rand der zweiten Lage 2 ist durch eine gestrichelte Linie gekennzeichnet. Die erste Öffnung 1110 ist so angeordnet, dass sie durch eine Umfangsnaht 21 geteilt ist, die Gassacklagen miteinander verbindet, die die Kammer des Gassacks bilden. Ein Abschnitt der ersten Öffnung 1110, der sich zwischen der Umfangsnaht 21 und dem Rand der zweiten Lage 2 erstreckt, bildet die Durchgangsöffnung 1111. Durch die Durchgangsöffnung 1111 ist ein Zündkabel 6 eines Gasgenerators hindurchgeführt.

Die Figuren 19A und 19B stellen eine Abwandlung der Variante der Fig. 18 dar. Hier weist die zweite Lage 2 im Bereich der ersten Öffnung 1110 eine Lasche 2220 auf, die durch die (längliche) Öffnung 1110 nach außen geführt ist (Fig. 19A). Anschließend kann sie in Richtung auf den Gasgenerator (in Fig. 19A nicht dargestellt; vgl. Fig. 19B) umgebogen und mit einem Ende an diesem befestigt werden, wozu eine Befestigungsstruktur (Öffnung 2221) vorgesehen ist, über die die Lasche an einem Bolzen des Gasgenerators festgelegt werden kann.

In einer anderen erfindungsgemäßen Variante (Fig. 19B) ist die Lasche 2220 in der Kammer des Gassacks in Richtung auf den Gasgenerator 5 umgebogen und mit einem Ende durch die Öffnung 1110 nach außen geführt. Das nach außen geführte Ende der Lasche 2220 ist über das Kabel 6 gelegt und über die in dem nach außen geführten Ende vorgesehene Öffnung 2221 an einem Befestigungsbolzen 56 des Gasgenerators 5 befestigt.

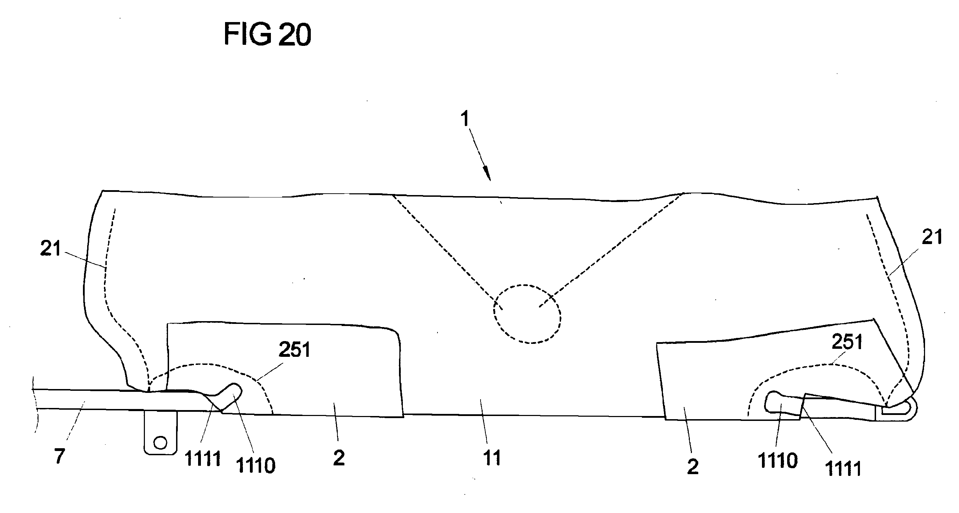

Ein weiteres Beispiel einer Gassackanordnung zeigt Fig. 20. Ein Gassack 1 weist zwei Durchgangsöffnungen 1111 auf, die jeweils durch sich überlappende erste und zweite Öffnungen in einer ersten Lage 11 und einer zweite Lage 2 gebildet sind. Die ersten und zweiten Öffnungen verlaufen jeweils V-förmig (vgl. Fig. 17L).

Durch die Durchgangsöffnungen 1111 erstreckt sich ein Gasleitrohr (Gaslanze) 7 hindurch. Das Gasleitrohr 7 ist z.B. Bestandteil einer Kopf-Airbag-Anordnung.

### Bezugszeichenliste

- 1: Gassack
- 11: Gassacklage
- 111, 111a, 111b, 111c: erster Schlitz
- 1110: erste Öffnung
- 1111: Durchgangsöffnung
- 1112: erste Lasche
- 100: Gassackzuschnitt
- 2: Funktionslage
- 21: Umfangsnaht
- 22, 22a, 22b: zweiter Schlitz
- 220: zweite Öffnung
- 23: Überlappbereich
- 24: kreisförmige Öffnung
- 25: Abschnitt
- 251: Naht
- 201: erste Lage
- 202: zweite Lage
- 2010, 2011: Naht
- 2012: Abschnitt
- 2013: Endabschnitt
- 2220: zweite Lasche
- 2221: Öffnung
- 5: Gasgenerator
- 51: erstes Ende
- 55: zweites Ende
- 56: Bolzen
- 6: Zündkabel
- 7: Gasleitrohr

## Patentansprüche

1. Gassackanordnung, mit
- einem Gassack (1), der mindestens eine aufblasbare Kammer und mindestens eine erste Öffnung (1110) aufweist; und
- einer Abdeckung (2), die die erste Öffnung (1110) des Gassacks (1) teilweise überdeckt, wobei
- die Kammer des Gassacks (1) durch den nicht von der Abdeckung (2) abgedeckten Abschnitt (1111) der ersten Öffnung (1110) hindurch zugänglich ist,
**dadurch gekennzeichnet,**
**dass** die erste Öffnung (1110) schlitzförmig ausgebildet ist und sich mit einem Abschnitt (1111) außerhalb der Abdeckung (2) erstreckt.

2. Gassackanordnung nach Anspruch 1, **dadurch gekennzeichnet, dass** der Abschnitt, der sich außerhalb der Abdeckung (2) erstreckt, eine Durchgangsöffnung (1111) zu der Kammer des Gassacks (1) bildet.

3. Gassackanordnung nach Anspruch 2, **dadurch gekennzeichnet, dass** die Durchgangsöffnung (1111) sich zwischen einer Umfangsnaht (21) des Airbags und dem Rand der Abdeckung (2) erstreckt.

4. Gassackanordnung nach Anspruch 2 oder 3, **dadurch gekennzeichnet, dass** die Gassackanordnung einen Gasgenerator (5) aufweist, wobei ein Zündkabel (6) des Gasgenerators durch die Durchgangsöffnung (1111) hindurchgeführt ist.

5. Gassackanordnung nach Anspruch 1, **dadurch gekennzeichnet, dass** die erste Öffnung (1110) durch eine Umfangsnaht (21) geteilt ist, wobei die Umfangsnaht auch die Gassacklagen, die die Kammer des Gassacks bilden, miteinander verbindet.

6. Gassackanordnung nach Anspruch 1, **dadurch gekennzeichnet, dass** die Abdeckung (2) im Bereich der ersten Öffnung eine Lasche (2220) aufweist, die durch die erste Öffnung hindurchführbar ist.

7. Gassackanordnung nach Anspruch 6, **dadurch gekennzeichnet, dass** die Gassackanordnung einen Gasgenerator (5) aufweist, wobei die Lasche (2220) in Richtung auf den Gasgenerator (5) umgebogen ist.

8. Gassackanordnung nach Anspruch 7, **dadurch gekennzeichnet, dass** die Lasche (2220) an dem Gasgenerator (5) fixiert ist.

9. Gassackanordnung nach Anspruch 7, **dadurch gekennzeichnet, dass** die Lasche (2220) eine Befestigungsstruktur aufweist, mittels der die Lasche (2220) an dem Gasgenerator (5) befestigt wird.

10. Gassackanordnung nach Anspruch 9, **dadurch gekennzeichnet, dass** die Befestigungsstruktur eine Öffnung (2221) ist, mittels der die Lasche (2220) an einem Befestigungsbolzen (56) des Gasgenerators (5) befestigt werden kann.

11. Gassackanordnung nach Anspruch 7, **dadurch gekennzeichnet, dass** die Lasche (2220) mit einem Ende durch die Öffnung (1110) nach außen geführt ist, wobei das nach außen geführte Ende der Lasche (2220) über das Zündkabel (6) des Gasgenerators (5) gelegt wird.

## Claims

1. Airbag arrangement with
- an Airbag (1) that comprises at least one inflatable chamber and at least one first opening (1110); and
- a cover (2) that partially covers the first opening (1110) of the airbag (1), wherein
- the chamber of the airbag (1) is accessible through the section (1111) of the first opening (1110) that is not covered by the cover (2),
**characterized in that**
the first opening (1110) is formed slot-shaped and extends with a section (1111) outside of the cover (2).

2. Airbag arrangement according to claim 1, **characterized in that** the section that extends outside of the cover (2) forms a passage opening (1111) to the chamber of the airbag (1).

3. Airbag arrangement according to claim 2, **characterized in that** the passage opening (1111) extends between a circumferential seam (21) and the edge of the cover (2).

4. Airbag arrangement according to claim 2 or 3, **characterized in that** the airbag arrangement comprises a gas generator (5), wherein an ignition cable (6) of the gas generator is guided through the passage opening (1111).

5. Airbag arrangement according to claim 1, **characterized in that** the first opening (1110) is divided by a circumferential seam (21), wherein the circumferential seam also connects the airbag layers forming the chamber of the airbag to each other.

6. Airbag arrangement according to claim 1, **characterized in that** the cover (2) comprises in the area of the first opening a flap (2220) which can be passed through the first opening.

7. Airbag arrangement according to claim 6, **characterized in that** the airbag arrangement comprises a gas generator (5), wherein the flap (2220) is bend in direction to the gas generator (5).

8. Airbag arrangement according to claim 7, **characterized in that** the flap (2220) is fixed at the gas generator (5).

9. Airbag arrangement according to claim 7, **characterized in that** the flap (2220) comprises a mounting structure, by means of which the flap (2220) is mounted at the gas generator (5).

10. Airbag arrangement according to claim 9, **characterized in that** the mounting structure is an opening (2221) by means of which the flap (2220) can be mounted at a mounting bolt (56) of a gas generator (5).

11. Airbag arrangement according to claim 7, **characterized in that** the flap (2220) is passed with an end through the opening (1110) outwards, wherein the end of the flap (2220) passed outwards is laid over the ignition cable (6) of the gas generator (5).

## Revendications

1. Agencement de sac gonflable avec
- un sac gonflable (1) qui présente au moins une chambre gonflable et au moins une première ouverture (1110) ; et
- un élément de recouvrement (2) qui recouvre partiellement la première ouverture (1110) du sac gonflable (1),
- la chambre du sac gonflable (1) étant accessible par la section (1111) non recouverte par l'élément de recouvrement (2) de la première ouverture (1110),
**caractérisé en ce que** la première ouverture (1110) est réalisée sous la forme d'une fente et s'étend avec une section (1111) en dehors de l'élément de recouvrement (2).

2. Agencement de sac gonflable selon la revendication 1, **caractérisé en ce que** la section qui s'étend en dehors de l'élément de recouvrement (2) forme une ouverture de passage (1111) vers la chambre du sac gonflable (1).

3. Agencement de sac gonflable selon la revendication 2, **caractérisé en ce que** l'ouverture de passage (1111) s'étend entre une couture périphérique (21) de l'airbag et le bord de l'élément de recouvrement (2).

4. Agencement de sac gonflable selon la revendication 2 ou 3, **caractérisé en ce que** l'agencement de sac gonflable présente un générateur de gaz (5), un câble d'allumage (6) du générateur de gaz étant guidé à travers l'ouverture de passage (1111).

5. Agencement de sac gonflable selon la revendication 1, **caractérisé en ce que** la première ouverture (1110) est divisée par une couture périphérique (21), la couture périphérique reliant entre elles aussi les couches de sac gonflable qui forment la chambre du sac gonflable.

6. Agencement de sac gonflable selon la revendication 1, **caractérisé en ce que** l'élément de recouvrement (2) présente, dans la zone de la première ouverture, une languette (2220) qui peut être guidée à travers la première ouverture.

7. Agencement de sac gonflable selon la revendication 6, **caractérisé en ce que** l'agencement de sac gonflable présente un générateur de gaz (5), la languette (2220) étant repliée en direction du générateur de gaz (5).

8. Agencement de sac gonflable selon la revendication 7, **caractérisé en ce que** la languette (2220) est fixée sur le générateur de gaz (5).

9. Agencement de sac gonflable selon la revendication 7, **caractérisé en ce que** la languette (2220) présente une structure de fixation, à l'aide de laquelle la languette (2220) est fixée sur le générateur de gaz (5).

10. Agencement de sac gonflable selon la revendication 9, **caractérisé en ce que** la structure de fixation est une ouverture (2221), à l'aide de laquelle la languette (2220) peut être fixée sur un boulon de fixation (56) du générateur de gaz (5).

11. Agencement de sac gonflable selon la revendication 7, **caractérisé en ce que** la languette (2220) est guidée vers l'extérieur avec une extrémité par l'ouverture (1110), l'extrémité guidée vers l'extérieur de la languette (2220) étant posée au-dessus du câble d'allumage (6) du générateur de gaz (5).
